Europäisches Patentamt

European Patent Office

Office européen des brevets

(19)

(11) Veröffentlichungsnummer: **0 261 353**
**A2**

(12) **EUROPÄISCHE PATENTANMELDUNG**

(21) Anmeldenummer: 87111136.5

(22) Anmeldetag: 01.08.87

(51) Int. Cl.4 **G01D 5/20** , G01D 5/24 ,
//G01F23/36

(30) Priorität: 24.09.86 CH 3824/86

(43) Veröffentlichungstag der Anmeldung:
30.03.88 Patentblatt 88/13

(84) Benannte Vertragsstaaten:
**AT DE FR GB IT**

(71) Anmelder: **GRAPHA-HOLDING AG**
**Seestrasse 41**
**CH-6052 Hergiswil(CH)**

(72) Erfinder: **Duss, Hans Peter**
**Pilgerstrasse 30**
**CH-5405 Dättwil(CH)**

(74) Vertreter: **Fillinger, Peter, Dr.**
**Rütistrasse 1a**
**CH-5400 Baden(CH)**

(54) **Messeinrichtung.**

(57) Die Einrichtung dient dem Messen des Zustandes eines Körpers (2, 20) hinsichtlich seiner Verschiebelage längs einem Weg oder seiner Dielektrizitätskonstante in einem abgeschlossenen System. Damit ein Sensor ohne Stromversorgung arbeiten kann, wird vorgeschlagen, dass der LC-Schwingkreis (6) eines Oszillators derart mit dem Körper (20) in Wirkverbindung steht, dass sich die Impedanz des Schwingkreises (6) in Abhängigkeit des Zustandes des Körpers (2, 20) ändert. Der Schwingkreis (6) ist mit dem Aktivteil (9) des Oszillators durch einen berührungslosen, linearen Übertrager (8, 10) gekoppelt, wobei dem Aktivteil (9) ein Auswerter (12) zugeordnet ist.

FIG.4

EP 0 261 353 A2

## Messeinrichtung

Die vorliegende Erfindung bezieht sich auf eine Messeinrichtung gemäss dem Oberbegriff des Patentanspruchs I.

In hermetisch geschlossenen oder rotierenden Systemen stellt sich das Problem, Lageveränderungen von im System angeordneten Körpern zu messen. Solche Systeme können geschlossene Tanks sein, wobei das darin enthaltene, fliessfähige Medium den Körper bildet, dessen Niveauhöhe oder Dielektrizitätskonstante zu messen sind. Die vorliegende Erfindung stellt sich die Aufgabe, eine Einrichtung der eingangs erwähnten Art zu schaffen, deren Sensor ohne Stromversorgung arbeitet und dessen berührungsfrei empfangene Signale als digitale Grösse ohne A/D-Wandlung auswertbar sind.

Erfindungsgemäss wird diese Aufgabe gelöst durch die kennzeichnenden Merkmale des Anspruches I.

Anhand der beiliegenden schematischen Zeichnung wird die Erfindung beispielsweise erläutert.

Es zeigen:

Fig. I ein erstes Anwendungsbeispiel der erfindungsgemässen Messeinrichtung in Verbindung mit einem rotierenden System zur Bestimmung des Zangenabstandes eines Greifers,

Fig. 2 und 3 zwei weitere Anwendungsbeispiele der erfindungsgemässen Messeinrichtung in Verbindung mit einem unbewegten System und

Fig. 4 ein Schema eines Oszillators.

In der Zeichnung bezeichnet die Hinweisziffer I eine rotierende Plattform. Darauf ist ein zweiarmiger Hebel 3 mit einem weichmagnetischen Topf 2 - schwenkbar gelagert. Das andere Hebelende ist als Greifer ausgebildet, der mit einer Einspannbacke 3a zusammenwirkt. Der Topf 2 taucht verschieden tief in eine Spule 5 ein, je nach der Dicke des erfassten Werkstückes 4, welche Spule 5 Teil eines in der Trommel I angeordneten und mitrotierenden Schwingkreises 6 ist, der weiter eine Kapazität 7 und eine nahe der Peripherie der Plattform I liegende Koppelspule 8 mitumfasst. Der Schwingkreis 6 einerseits ist Teil eines LC-Oszillators, der weiter einen an einer Energiequelle anschliessbaren Aktivteil 9 mit einer Spule 10 und der Elektronik II aufweist. Der Peripherie der Trommel I gegenüber liegt die ortsfeste Spule 10, die in transformatorischer Wirkverbindung mit drehender Koppelspule 8 einen linearen Übertrager bildet und einerseits die Induktivitätsänderungen des Schwingkreises 6 einem Auswerter 12 signalisiert und anderseits den Schwingkreis 6 anregt. Für das Anregen des Schwingkreises 6 kann nebst der Spule 10 eine gesonderte Spule vorgesehen sein, so dass die Spule 10 lediglich als Signalempfänger wirkt, der in berührungsloser Verbindung mit der Spule 8 steht. Der Auswerter 12 weist eine Aufbereitungselektronik 13 für die von der Spule 10 empfangenen Signale und eine Auswertelektronik 14 auf, welche die Dicke oder Lage des Werkstückes 4, durch die Kenntnisse der Hebelverhältnisse, sowie der Induktivitätsänderung der Spule 5 durch das Eintauchen des Topfes 2 ermittelt.

Nach einem nicht dargestellten Ausführungsbeispiel könnte die Spule 5 entfallen, wobei anstatt des Weicheisenkerns 2 ein plattenförmiges Medium zwischen die Platten des Kondensators 7 greift und dessen Kapazität mit der Eintauchtiefe ändert.

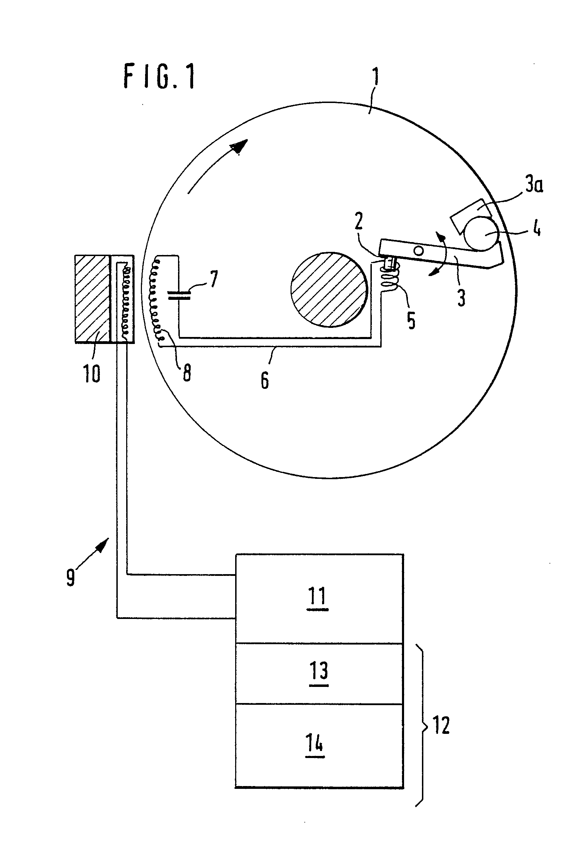

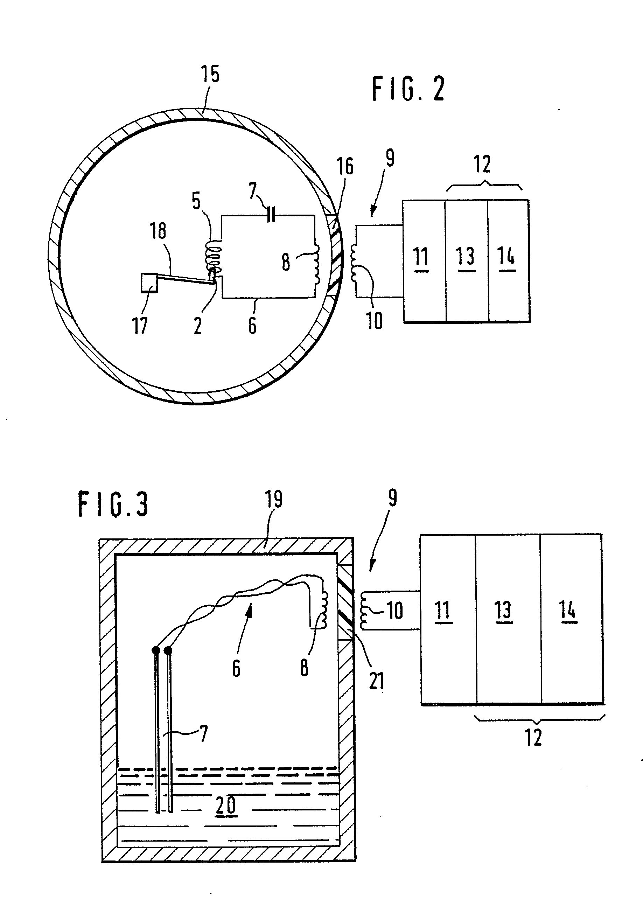

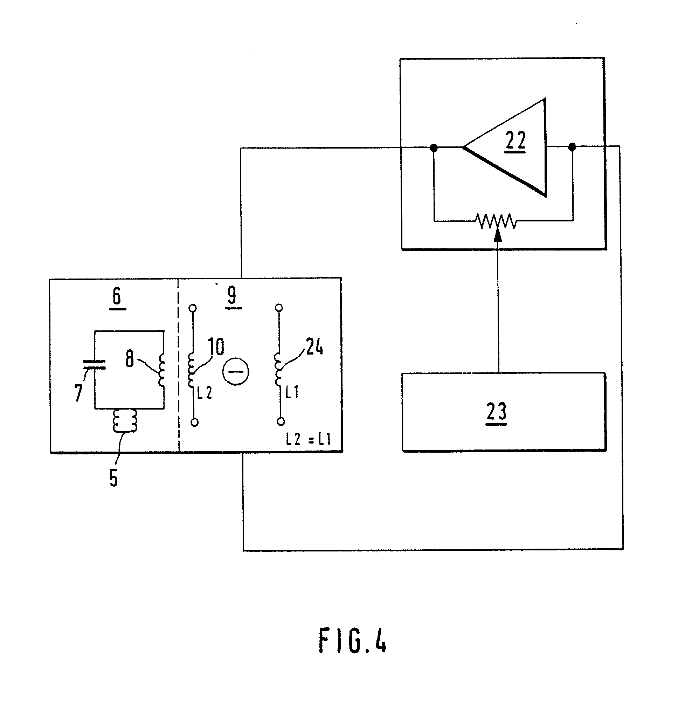

Beim Ausführungsbeispiel nach Fig. 2 bezeichnen gleiche Hinweisziffern gleiche Teile wie im Ausführungsbeispiel nach Fig. I. Die Ziffer 15 weist auf ein hermetisch abgeschlossenes System, wie zum Beispiel ein Vakuumrezipient oder ein Bioreaktor. Dessen Wand besteht in mindestens einem Bereich 16 aus einem elektrisch nicht leitenden Material. Um im Inneren eines solchen Systems die Temperatur messen zu können, wird darin der LC-Schwingkreis angebracht, der eine Messspule 5 mit einem weichmagnetischen Kern 2 aufweist. An einem ortsfesten Lager 17 ist ein Bimetallstreifen 18 mit einem Ende befestigt, der am beweglichen freien Ende den weichmagnetischen Kern 2 trägt. Entsprechend der im System 15 herrschenden Temperatur biegt sich der Bimetallstreifen 18 mehr oder weniger stark, wodurch der Kern 2 entsprechend mehr oder weniger in die Spule 5 eintaucht. Der Schwingkreis 2, 5, 6, 7, 8 wird über die Koppelspule 8 von der äusseren Spule 10 zum Schwingen angeregt. Der aktive Teil 9 des Oszillators mit der Spule 10 und der Elektronik II sind verantwortlich für die Anregung der Schwingung, wobei der Auswerter 12 die Resonanzfrequenz misst, welche ein Mass für die Temperatur im System 15 darstellt.

Nach einem nicht dargestellten Ausführungsbeispiel kann anstelle der Spule 5 und des Bimetallstreifens 18 mit Topf 2 ein Kondensator 7 als temperaturbestimmendes Element verwendet werden, wobei ausgenützt wird, dass der Kondensator seine Kapazität mit der Temperatur ändert.

Auch beim Ausführungsbeispiel nach Fig. 3 bezeichnen gleiche Hinweisziffern gleiche Teile wie bei den vorangehenden Beispielen. Mit 19 ist ein Behälter bezeichnet, in dem eine Flüssigkeit 20 mit variablem Niveau enthalten ist. Die Flüssigkeit weist keine oder nur eine geringe elektrische Leitfähigkeit auf. Der Behälter 19 besteht im Bereich 21 ebenfalls aus einem elektrisch nicht leitenden Material. Für das Messen der Füllstandhöhe der Flüssigkeit 20 wird im Behälter 19 der Schwingkreis 6 eines LC-Oszillators untergebracht, wobei der Schwingkreis eine Koppelspule 8 und einen Plattenkondensator 7 aufweist. Die Platten des Plattenkondensators 7 tauchen in die Flüssigkeit 20 ein, so dass sich dessen Kapazität mit der Füllstandhöhe ändert. Das Anregen des Schwingkreises 6 und das Ermitteln der Resonanzfrequenz sowie das Bestimmen der Füllstandhöhe erfolgt in der vorbeschriebenen Weise mittels der Teile 9 bis 14.

Dieses Ausführungsbeispiel kann, wenn das Niveau der Flüssigkeit 20 konstant ist, zur Messung von deren Dielektrizitätskonstante verwendet werden.

Bei allen Ausführungsbeispielen weist die Elektronik 11 im Wesentlichen einen Verstärker 22 mit variabler Verstärkung, eine Amplitudenregelung 23 sowie eine Kompensationsspule 24 mit der Induktivität L1 auf, welche gleich der Induktivität L2 der Spule 10 ist. Hierbei ist die Impedanzdifferenz zwischen beiden Spulen 10, 24 proportional der Impedanz des LC-Schwingkreises 6.

Die zum Auswerter 12 gehörende Aufbereitungselektronik 13 besteht aus einem Frequenzzähler und die Auswertelektronik 14 aus einer Anzeige für das Zählergebnis des Frequenzzählers 13 oder aus einem Comparator, vorzugsweise einem Mikroprozessor, der ein Signal auslöst, wenn das Zählergebnis von einem Sollwert oder Sollwertbereich abweicht.

## Ansprüche

1. Einrichtung zum Messen des Zustandes eines Körpers (2, 20) hinsichtlich seiner Verschiebelage längs einem Weg oder seiner Dielektrizitätskonstante in einem abgeschlossenen System, dadurch gekennzeichnet, dass der LC-Schwingkreis (6) eines Osziallators derart mit dem Körper (20) in Wirkverbindung steht, dass sich die Impedanz des Schwingkreises (6) in Abhängigkeit des Zustandes des Körpers (2, 20) ändert, dass der Schwingkreis (6) mit dem Aktivteil (9) des Oszillators durch einen berührungslosen, linearen Übertrager (8, 10) gekoppelt ist, und dass dem Aktivteil (9) ein Auswerter (12) zugeordnet ist.

2. Einrichtung nach Anspruch 1, wobei der Körper (20) aus einem elektrisch isolierenden Material besteht, dadurch gekennzeichnet, dass die Kapazität des Schwingkreises (6) ein Plattenkondensator ist, dessen Platten zu gegenüberliegenden Seiten des Weges angeordnet sind, derart, dass eine Verschiebung des Körpers (20) längs dem Weg die Kapazität des Kondensators (7) ändert.

3. Einrichtung nach Anspruch 1, wobei der Körper (2) aus einem weichmagnetischen Werkstoff besteht, dadurch gekennzeichnet, dass der Schwingkreis (6) eine Spule (5) aufweist, welche um den genannten Weg herum gewickelt ist, derart, dass eine Verschiebung des Körpers (20) längs dem Weg die Induktivität der Spule (5) ändert.

4. Verwendung einer Vorrichtung nach Anspruch 1 zum Messen der Zustandsänderung eines Körpers (2, 20) hinsichtlich Lage oder der Dielektrizitätskonstane in einem abgeschlossenen System, dadurch gekennzeichnet, dass der Schwingkreis (6) des Oszillators im System angeordnet ist und in Wirkverbindung mit dem Körper (2, 20) steht, derart, dass eine Zustandsänderung des Körpers die Kapazität oder die Induktivität des Resonanzschwingkreises (6) ändert, dass der Schwingkreis eine Koppelspule (8) hinter einem elektrisch nicht leitenden Fenster (16, 21) der Systemwand aufweist, welche mit einer Spule (10) des ausserhalb des Systems angeordneten Aktivteils des Oszillators einen berührungslosen, linearen Übertrager bildet und dass dem Aktivteil (9) ein Auswerter (12) zugeordnet ist.

FIG.1

FIG. 2

FIG. 3

FIG.4